# EUROPÄISCHE PATENTSCHRIFT

(11) **EP 2 824 447 B1**
(45) Veröffentlichungstag und Bekanntmachung des Hinweises auf die Patenterteilung: **08.08.2018**
(21) Anmeldenummer: 14170138.3
(22) Anmeldetag: 28.05.2014
(51) Int. Cl.: G01N 21/91, B64F 5/00, F01D 5/00, G01N 21/33, G01N 21/64

(54) **Verfahren zur zerstörungsfreien Prüfung von Werkstückoberflächen**
Method for non-destructive testing of workpiece surfaces
Procédé d'examen non destructif de surfaces de pièces usinées

(30) Priorität: 09.07.2013 DE 102013213369
(43) Veröffentlichungstag der Anmeldung: 14.01.2015
(73) Patentinhaber: MTU Aero Engines AG, 80995 München (DE)
(72) Erfinder: Satzger, Wilhelm, 80807 München (DE); Bamberg, Joachim, 85221 Dachau (DE); Hessert, Roland, 82211 Herrsching (DE); Schuster, Robert, 85221 München (DE); Heß, Thomas, 81541 München (DE)

(56) Entgegenhaltungen:
- EP-A1- 0 677 611
- EP-A1- 0 978 719
- EP-A1- 2 623 963
- WO-A1-01/70644
- DE-A1- 3 039 226
- DE-A1- 3 342 855
- GB-A- 819 925
- GB-A- 2 098 233
- GB-A- 2 109 395
- JP-A- S5 530 618
- JP-A- H03 197 851
- US-A- 4 281 033
- US-A- 5 115 136

## Beschreibung

Die Erfindung betrifft ein Verfahren zur zerstörungsfreien Prüfung von Werkstückoberflächen mittels einer Eindringprüfung.

Verfahren zur zerstörungsfreien Prüfung von Werkstückoberflächen sind bekannt. Bei der so genannten Eindringprüfung wird ein Eindringmittel auf eine gereinigte und zu überprüfende Werkstückoberfläche aufgebracht. Die Kapillarwirkung von feinen Oberflächenrissen und Poren begünstigt das Eindringen des Eindringmittels in derartige Ausnehmungen an der Werkstückoberfläche. Farbeindringprüfverfahren arbeiten mit nicht-fluoreszierenden Farblösungen als Eindringmittel (z.B. "Rot-Weiß-Verfahren"). Bei der so genannten fluoreszierenden Eindringprüfung wird mit einem fluoreszierenden Eindringmittel gearbeitet. Nach einer vorgegebenen Einwirkzeit wird dann überschüssiges Eindringmittel in einem Zwischenreinigungsvorgang abgewaschen. Anschließend wird ein Entwickler auf die zu prüfende Werkstückoberfläche aufgetragen. Der Entwickler fördert die Rückbenetzung des Eindringmittels an der Ausnehmung der Werkstückoberfläche, wobei durch den Entwickler das Eindringmittel aus der Ausnehmung an die Oberfläche gesaugt wird. Damit werden mögliche Unregelmäßigkeiten in der Werkstückoberfläche, wie z. B. rissartige Materialtrennungen deutlich sichtbar.

Die fluoreszierende Eindringprüfung wird insbesondere im Flugzeug-, Schiffs- und Automobilbau sowie anderen metallverarbeitenden Industrien eingesetzt. Aber auch andere Stoffe, wie z. B. Keramik können auf entsprechende Oberflächenrisse und Poren untersucht werden.

Nachteilig an dem bekannten Verfahren, insbesondere bei der Verwendung im Flugzeugbau, ist jedoch, dass nach dem Auftrag des Entwicklers und der entsprechenden Darstellung der Ausnehmungen bzw. Oberflächenrisse zur Verifikation der Anzeige die entsprechenden Bereiche der vermuteten Ausnehmungen manuell oberflächengereinigt werden müssen, um überschüssiges Eindringmittel, welches durch den Auftrag des Entwicklers sich wieder an der Werkstückoberfläche um den Bereich der Ausnehmung herum verteilt hat, zu entfernen. Erst nach dieser mechanischen Reinigung wird das ausschließlich die Ausnehmung bzw. den Oberflächenriss auskleidende Eindringmittel sichtbar. Nur dadurch ist eine exakte Beurteilung und Bemaßung der Ausnehmung möglich. Dieser manuelle Reinigungsschritt ist jedoch zeitaufwändig und kostenintensiv. Zudem ist er nur schwer standardisierbar, wodurch auch eine standardisierte Klassifikation möglicher Ausnehmungen bzw. Fehlstellen in der Werkstückoberfläche schwierig ist. Aus der GB-2109395 A und der GB-819925 sind Verfahren zur zerstörungsfreien Prüfung von Werkstückoberflächen unter Verwendung von fluoreszierenden oder nicht-fluoreszierenden Eindringmittel beziehungsweise Farbeindringmittel bekannt. Des Weiteren ist aus der EP-0677611 A und der WO-01/70644 A die grundsätzliche Verwendung von Ozon als Bleichmittel bekannt. Aus der zwischenveröffentlichten Patentanmeldung EP 2 623 963 A1 ist ebenfalls ein gattungsgemäßes Prüfungsverfahren mit einem Bleichschritt mittels Lichtstrahlung bekannt. Aufgabe der vorliegenden Erfindung ist es, ein Verfahren zur zerstörungsfreien Prüfung von Werkstückoberflächen zu schaffen, welches eine schnellere und kostengünstigere Überprüfung der Werkstückoberflächen ermöglicht.

Die Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den jeweiligen Unteransprüchen angegeben.

Ein erfindungsgemäßes Verfahren zur zerstörungsfreien Prüfung von Werkstückoberflächen von Werkstücken mittels einer Eindringprüfung, nämlich einer fluoreszierenden Eindringprüfung oder Farbeindringprüfung umfasst folgende Schritte:
a) Reinigen des zu überprüfenden Bereichs der Werkstückoberfläche;
b) Aufbringen eines Eindringmittels auf den zu überprüfenden Bereich der Werkstückoberfläche, wobei das Eindringmittel in mögliche Ausnehmungen der Werkstückoberfläche eindringt und ein flüssiges fluoreszierendes Eindringmittel oder ein flüssiges nicht-fluoreszierendes Farbeindringmittel ist;
c) Entfernen des überschüssigen Eindringmittels von der Werkstückoberfläche;
d) Aufbringen eines Entwicklers auf den zu prüfenden Bereich der Werkstückoberfläche;
e) Bleichen des fluoreszierenden Eindringmittels oder des nicht-fluoreszierenden Farbeindringmittels mittels eines gasförmigen oder flüssigen Oxidationsmittels in der durch den Auftrag des Entwicklers auf der Werkstückoberfläche gebildeten Schicht, wobei das Oxidationsmittel Ozon ist und das Werkstück mit der Werkstückoberfläche zur Ausführung des Verfahrensschritts e) in einen mit Ozon gefüllten Raum oder Behälter eingebracht wird oder zumindest im Bereich der Werkstückoberfläche einem Ozonstrom ausgesetzt wird; und
f) Optische Auswertung des in den vorhandenen Ausnehmungen der Werkstückoberfläche verbliebenen fluoreszierenden Eindringmittels oder nicht-fluoreszierenden Farbeindringmittels, wobei nach oder während der optischen Auswertung gemäß Verfahrensschritt f) ein weiterer Bleichvorgang des fluoreszierenden Eindringmittels oder des nicht-fluoreszierenden Farbeindringmittels in der Entwicklerschicht (16) mittels des gasförmigen Oxidationsmittels erfolgt.

Durch das Bleichen des fluoreszierenden Eindringmittels oder des nicht-fluoreszierenden Farbeindringmittels in der Entwicklerschicht kann auf eine manuelle Reinigung der Werkstückoberfläche nach dem Aufbringen des Entwicklers verzichtet werden. Durch das zumindest teilweise Bleichen des durch den Entwickler wieder an die Werkstückoberfläche aus den entsprechenden Ausnehmungen gesaugten Eindringmittels werden die entsprechenden Ausnehmungen bzw. Fehlstellen, rissartigen Materialtrennungen, Poren und Risse in der Werkstückoberfläche deutlich abgegrenzt, markiert und dargestellt. Die optische Auswertung erfolgt anhand des sich noch in den genannten Ausnehmungen befindlichen fluoreszierenden Eindringmittels oder nicht-fluoreszierenden Farbeindringmittels, so dass die Ausnehmungen klar gegenüber der umgebenden Werkstückoberfläche abgegrenzt sind. Zudem wird ein Teil des sich in den Ausnehmungen befindlichen Eindringmittels aufgrund des osmotischen Drucks wieder in die Entwicklerschicht über und/oder neben den entsprechenden Ausnehmungen gedrückt. Dadurch ergibt sich vorteilhafterweise eine Art Vergrößerungseffekt, der die Ausnehmungen deutlicher hervorhebt und erkennen lässt. Des Weiteren werden Anteile an dem Eindringmittel, die sich nicht in den Ausnehmungen angesammelt haben, sondern an Unebenheiten oder Fremdkörpern auf der Oberfläche des Werkstücks haften zuverlässig gebleicht, so dass die verbleibenden, nicht gebleichten Anteile an Eindringmittel eindeutig auf das Vorhandensein von Ausnehmungen schließen lassen. Eine manuelle Oberflächenreinigung erübrigt sich. Vorteilhafterweise kann das erfindungsgemäße Verfahren standardisiert werden, so dass eine ebenfalls standardisierte Klassifikation möglicher Fehlstellen bzw. Ausnehmungen an Werkstückoberflächen möglich ist. Zudem ist eine Automatisierung der Eindringprüfung möglich. Auch wird durch das Bleichen des fluoreszierenden Eindringmittels oder des nicht-fluoreszierenden Farbeindringmittels mittels des gasförmigen oder flüssigen Oxidationsmittels eine möglicherweise bei Werkstücken mit rauen Oberflächen auftretende Hintergrundfluoreszenz zuverlässig beseitigt, so dass die Prüfung von Werkstückoberflächen einfach und zuverlässig durchgeführt werden kann. Des Weiteren kann das erfindungsgemäße Verfahren kostengünstig durchgeführt werden.

Erfindungsgemäß wird als Oxidationsmittel gasförmiges Ozon verwendet. Dabei kann das Werkstück mit der Werkstückoberfläche zur Ausführung des Verfahrensschritts e) in einen mit Ozon gefüllten Raum oder Behälter eingebracht werden. Es ist auch möglich, dass das Werkstück mit der Werkstückoberfläche zumindest im Bereich der Werkstückoberfläche einem Ozonstrom ausgesetzt wird. Es hat sich gezeigt, dass sich Ozon als Oxidationsmittel für den Bleichvorgang des erfindungsgemäßen Verfahrens hervorragend eignet. Es ist auch möglich, dass das Oxidationsmittel zur Ausführung des Verfahrensschritts e) erwärmt wird. Dadurch wird der Bleichvorgang vorteilhafterweise erheblich beschleunigt.

Des Weiteren wird nach oder während der optischen Auswertung gemäß Verfahrensschritt f) ein weiterer Bleichvorgang des fluoreszierenden Eindringmittels oder des nicht-fluoreszierenden Farbeindringmittels in der Entwicklerschicht mittels des gasförmigen oder flüssigen Oxidationsmittels erfolgen. Hierdurch können die bereits erhaltenen optischen Ergebnisse nochmals verifiziert werden.

In einer vorteilhaften Ausgestaltung des erfindungsgemäßen Verfahrens wird vor dem Verfahrensschritt e), d.h. dem Bleichen des fluoreszierenden Eindringmittels oder des nicht-fluoreszierenden Farbeindringmittels in einem Verfahrensschritt d1) eine erste optische Auswertung der Werkstückoberfläche durchgeführt. Durch diesen Zwischenschritt kann eine erste optische Kontrolle möglicher Ausnehmungen bzw. Fehlstellen in der Werkstückoberfläche durchgeführt werden, so dass sich das anschließende Bleichen des fluoreszierenden Eindringmittels oder des nicht-fluoreszierenden Farbeindringmittels auf diejenigen Bereiche der Werkstückoberfläche konzentriert, in denen möglichen Ausnehmungen bzw. Fehlstellen festgestellt werden. Dies kann zu einer weiteren Beschleunigung des Verfahrensablaufs beitragen. In weiteren vorteilhaften Ausgestaltungen des erfindungsgemäßen Verfahrens kann die optische Auswertung gemäß den Verfahrensschritten f) und/oder d1) bei Verwendung eines fluoreszierenden Eindringmittels mittels Bestrahlung der zu überprüfenden Werkstückoberfläche mit UV-Licht erfolgen. Dadurch können mit dem fluoreszierenden Eindringmittel ausgefüllte bzw. benetzte Ausnehmungen an der Werkstückoberfläche deutlich erkannt werden. Durch die verwendete UV-Strahlung ist eine deutliche und exakte Sichtbarmachung von Ausnehmungen in der Werkstückoberfläche möglich.

In einer weiteren vorteilhaften Ausgestaltung des erfindungsgemäßen Verfahrens kann nach Beendigung des Verfahrensschrittes f) eine Reinigung der Werkstückoberfläche erfolgen, so dass das Werkstück unmittelbar einer Weiterbearbeitung, insbesondere einem Reparaturverfahren unterzogen werden kann.

In einer weiteren vorteilhaften Ausgestaltung des erfindungsgemäßen Verfahrens können nach Beendigung des Verfahrensschritts f) die Verfahrensschritte b) bis f) wiederholt werden. Die Wiederholung dieser Verfahrensschritte kann vorteilhafterweise zu einer noch exakteren Darstellung unerwünschter Ausnehmungen an der Werkstückoberfläche führen.

In einer weiteren vorteilhaften Ausgestaltung des erfindungsgemäßen Verfahrens ist die Werkstückoberfläche eine Oberfläche einer Strömungsmaschine, insbesondere eines Bauteils einer Gasturbine. Bauteile von Strömungsmaschinen, wie z. B. eines Flugzeugtriebwerks, sind besonders kritisch bezüglich Unregelmäßigkeiten an den Bauteiloberflächen, wie z. B. feinen Rissen.

In einer weiteren vorteilhaften Ausgestaltung des erfindungsgemäßen Verfahrens ist das Eindringmittel ein fluoreszierendes Farbeindringmittel. Durch die Verwendung eines fluoreszierenden Farbeindringmittels ist neben der Fluoreszenzanzeige auch eine farbliche Ausgestaltung möglicher Ausnehmungen in der Werkstückoberfläche möglich. Dadurch kann die optische Auswertung der entsprechenden Ausnehmungen an der Werkstückoberfläche sehr einfach und exakt durchgeführt werden.

Verwendung findet das im Vorhergehenden beschriebene erfindungsgemäße Verfahren insbesondere bei der Herstellung, bei der Schlussprüfung und bei der Instandsetzung von Bauteilen einer Strömungsmaschine, insbesondere von Bauteilen einer Gasturbine.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigen:
Fig. la bis 1f ein um den Verfahrensschritt des Wiederholens des Bleichens während oder nach der optischen Auswertung gemäß Verfahrensschritt f) gekürztes Ablaufschema eines erfindungsgemäßen Verfahrens zur zerstörungsfreien Prüfung von Werkstückoberflächen mittels einer Eindringprüfung.

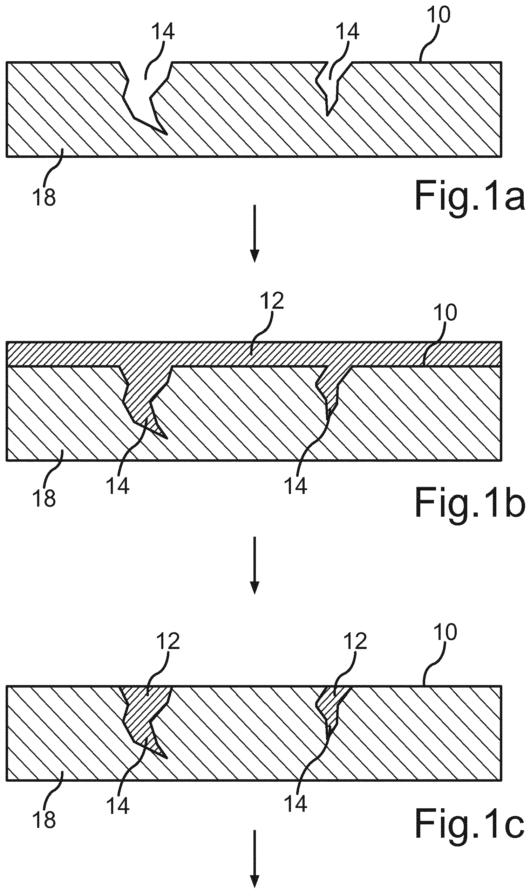

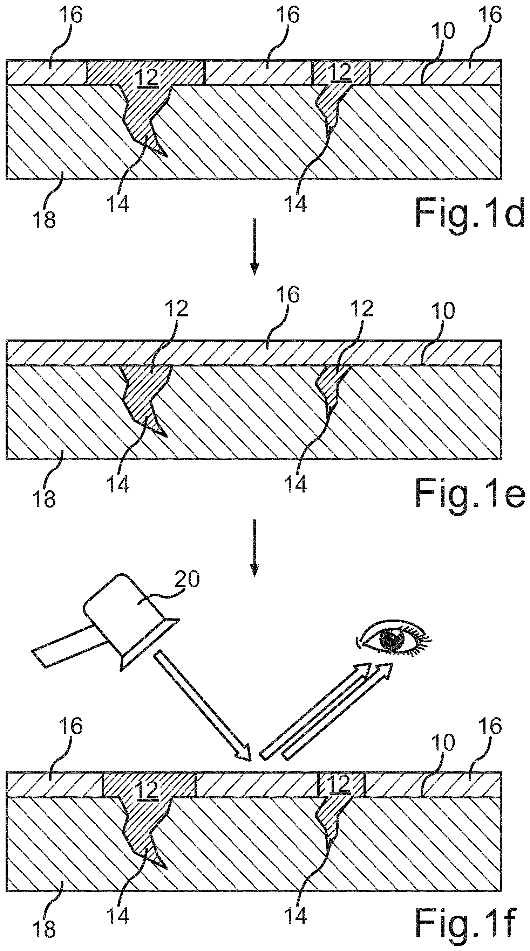

Die Figuren la bis 1f zeigen ein Ablaufschema eines Verfahrens zur zerstörungsfreien Prüfung einer Werkstückoberfläche 10 eines Werkstücks 18. Figur 1a zeigt ein Werkstück 18 mit einer Werkstückoberfläche 10 und rissförmige Ausnehmungen 14 in der Werkstückoberfläche 10. Die Werkstückoberfläche 10 wurde von Verunreinigungen gereinigt. Figur 1b zeigt das Werkstück 18 mit einem auf die Werkstückoberfläche 10 aufgetragenen Eindringmittel 12. Man erkennt, dass das Eindringmittel 12 neben dem schichtartigen Auftrag auf der Werkstückoberfläche 10 auch in die rissartigen Ausnehmungen 14 eindringt. In dem dargestellten Ausführungsbeispiel wird ein flüssiges fluoreszierendes Eindringmittel 12 verwendet. Entsprechende fluoreszierende Eindringmittel 12 sind in einer großen Vielzahl aus dem Stand der Technik bekannt. Auch andere, nicht-fluoreszierende Eindringmittel können verwendet werden. Dabei müssen je nach Art und Material des zu überprüfenden Werkstücks 18 Eindringmittel 12 verwendet werden, die aufgrund ihrer spezifisch eingestellten Eigenschaften jeweils das Bestreben haben, sich nicht nur auf der Werkstückoberfläche 10 auszubreiten, sondern gleichzeitig auch in die entsprechenden Ausnehmungen 14 der Werkstückoberfläche 10 einzudringen. Dabei können Eindringmittel 12 basierend auf Kohlenwasserstoffen und organischen Farbstoffen verwendet werden.

Nach einer für das Eindringmittel 12 spezifischen Eindringzeit wird in einem nachfolgenden Verfahrensschritt überschüssiges Eindringmittel 12 von der Werkstoffoberfläche 10 entfernt. Man erkennt in Figur 1c die gereinigte und getrocknete Werkstückoberfläche 10. Das Eindringmittel 12 ist nur noch in den Ausnehmungen 14 vorhanden. In einem weiteren Verfahrensschritt wird anschließend ein Entwickler 16 auf den zu prüfenden Bereich der Werkstückoberfläche 10 aufgebracht. Durch den Auftrag des Entwicklers 16 wird das Eindringmittel 12 aus der Ausnehmung 14 wieder an die Werkstückoberfläche 10 gezogen. Aus Figur 1d wird deutlich, dass nunmehr das Eindringmittel 12 nicht nur in der Ausnehmung 14, sondern auch in den die Ausnehmung 14 umgebenden Bereichen an der Werkstückoberfläche 10 innerhalb der Entwicklerschicht 16 vorhanden ist.

In einem nachfolgenden, weiteren Verfahrensschritt wird nunmehr mittels eines Auftrags von gasförmigen Ozon bzw. eines Einbringens des Werkstücks 18 mit der Werkstückoberfläche 10 in eine gasförmigen Ozonumgebung das fluoreszierende Eindringmittel 12 innerhalb der durch den Auftrag des Entwicklers 16 auf der Werkstückoberfläche 10 gebildeten Schicht gebleicht. Das Bleichen erfolgt bis zur zumindest teilweisen und auch vollständigen Ausbleichen der fluoreszierenden Bestandteile innerhalb des Eindringmittels 12 in der Schicht des Entwicklers 16. Figur le zeigt das Ende des Bleichvorgangs mit einem vollständigen Ausbleichen der fluoreszierenden Bestandteile des Eindringmittels 12 innerhalb der Entwicklerschicht 16. Die verwendeten Entwickler 16 sind ebenfalls aus dem Stand der Technik bekannt, üblicherweise werden anorganische Substanzen in Pulverform verwendet.

In Figur 1f ist ein abschließender Verfahrensschritt, nämlich die optische Auswertung des in den vorhandenen Ausnehmungen 14 der Werkstückoberfläche 10 verbliebenen fluoreszierenden Eindringmittels 12 dargestellt. Durch den vorherigen Bleichvorgang befindet sich das fluoreszierende Eindringmittel 12 überwiegend nur noch innerhalb der rissartigen Ausnehmungen 14 und nicht mehr an Unebenheiten oder Fremdkörpern auf der Werkstückoberfläche 10. Die Ränder der rissartigen Ausnehmungen 14 sind markiert und können entsprechend beobachtet und ausgewertet werden. Zudem wird ein Teil des sich in den Ausnehmungen 14 befindlichen Eindringmittels 12 aufgrund des osmotischen Drucks wieder in die Entwicklerschicht 16 über und/oder neben den Ausnehmungen 14 gedrückt. Dadurch ergibt sich vorteilhafterweise eine Art Vergrößerungseffekt, der die Ausnehmungen 14 deutlicher hervorhebt und erkennen lässt.

Durch den in der Figur le dargestellten Bleichvorgang wird zudem möglicherweise vorhandene Hintergrundfluoreszenz beseitigt, so dass die die rissartigen Ausnehmungen 14 kennzeichnenden fluoreszierenden Markierungen bzw. Bereiche deutlich erkennbar sind. Durch das beschriebenen Verfahren werden insbesondere folgende Vorteile erzielt: Ein automatisierbarer, exakt definierter Bleichvorgang, keine mechanische Verfälschung der Messergebnisse und die Möglichkeit einer mehrmaligen Verifikation des Verfahrens.

## Patentansprüche

1. Verfahren zur zerstörungsfreien Prüfung einer Werkstückoberfläche (10) eines Werkstücks (18) mittels einer fluoreszierenden Eindringprüfung oder Farbeindringprüfung, wobei das Verfahren folgende Schritte umfasst:
a) Reinigen des zu überprüfenden Bereichs der Werkstückoberfläche (10);
b) Aufbringen eines Eindringmittels (12) auf den zu überprüfenden Bereich der Werkstückoberfläche (10), wobei das Eindringmittel (12) in mögliche Ausnehmungen (14) der Werkstückoberfläche (10) eindringt und ein flüssiges fluoreszierendes Eindringmittel oder ein flüssiges nicht-fluoreszierendes Farbeindringmittel ist;
c) Entfernen des überschüssigen Eindringmittels (12) von der Werkstückoberfläche (10);
d) Aufbringen eines Entwicklers (16) auf den zu prüfenden Bereich der Werkstückoberfläche (10);
e) Bleichen des fluoreszierenden Eindringmittels (12) oder des nicht-fluoreszierenden Farbeindringmittels mittels eines gasförmigen Oxidationsmittels in der durch den Auftrag des Entwicklers (16) auf der Werkstückoberfläche (10) gebildeten Schicht, wobei das Oxidationsmittel Ozon ist und das Werkstück (18) mit der Werkstückoberfläche (10) zur Ausführung des Verfahrensschritts e) in einen mit Ozon gefüllten Raum oder Behälter eingebracht wird oder zumindest im Bereich der Werkstückoberfläche (10) einem Ozonstrom ausgesetzt wird; und
f) Optische Auswertung des in den vorhandenen Ausnehmungen (14) der Werkstückoberfläche (10) verbliebenen fluoreszierenden Eindringmittels (12) oder nicht-fluoreszierenden Farbeindringmittels, wobei nach oder während der optischen Auswertung gemäß Verfahrensschritt f) zur Verifizierung der erhaltenen optischen Ergebnisse ein weiterer Bleichvorgang des fluoreszierenden Eindringmittels (12) oder des nicht-fluoreszierenden Farbeindringmittels in der Entwicklerschicht (16) mittels des gasförmigen Oxidationsmittels erfolgt.

2. Verfahren nach Anspruch 1, **dadurch gekennzeichnet, dass** das Oxidationsmittel zur Ausführung des Verfahrensschritts e) erwärmt wird.

3. Verfahren nach einem der vorhergehenden Ansprüche, **dadurch gekennzeichnet, dass** vor dem Verfahrensschritt e) in einem Verfahrensschritt d1) eine erste optische Auswertung der Werkstückoberfläche (10) erfolgt.

4. Verfahren nach Anspruch 3, **dadurch gekennzeichnet, dass** die optische Auswertung gemäß dem Verfahrensschritt f) und/oder d1) mittels Bestrahlung der zu überprüfenden Werkstückoberfläche (10) mit UV-Licht erfolgt.

5. Verfahren nach einem der vorhergehenden Ansprüche, **dadurch gekennzeichnet, dass** nach Beendigung des Verfahrensschrittes f) eine Reinigung der Werkstückoberfläche (10) erfolgt.

6. Verfahren nach einem der vorhergehenden Ansprüche, **dadurch gekennzeichnet, dass** nach Beendigung des Verfahrensschrittes f) die Verfahrensschritte b) bis f) wiederholt werden.

7. Verfahren nach einem der vorhergehenden Ansprüche, **dadurch gekennzeichnet, dass** die Werkstückoberfläche (10) eine Oberfläche einer Strömungsmaschine, insbesondere eines Bauteils einer Gasturbine ist.

8. Verwendung eines Verfahrens nach einem der Ansprüche 1 bis 7 bei der Herstellung, bei der Schlussprüfung und bei der Instandsetzung von Bauteilen einer Strömungsmaschine, insbesondere von Bauteilen einer Gasturbine.

## Claims

1. Method for non-destructive testing of a workpiece surface (10) of a workpiece (18) by means of fluorescent penetrant testing or dye penetrant testing, wherein the method comprises the following steps:
a) cleaning the region of the workpiece surface (10) to be inspected;
b) applying a penetrant (12) to the region of the workpiece surface (10) to be inspected, wherein the penetrant (12) penetrates possible recesses (14) in the workpiece surface (10) and is a liquid fluorescent penetrant or a liquid non-fluorescent dye penetrant;
c) removing excess penetrant (12) from the workpiece surface (10),
d) applying a developer (16) to the region of the workpiece (10) to be tested;
e) bleaching the fluorescent penetrant (12) or the non-fluorescent dye penetrant by means of a gaseous oxidant in the layer formed by applying the developer (16) to the workpiece surface (10), wherein the oxidant is ozone and, in order to carry out method step e), the workpiece (18) together with the workpiece surface (10) is inserted into a room or container filled with ozone or is at least subjected to a flow of ozone in the region of the workpiece surface (10); and
f) carrying out a visual assessment of the fluorescent penetrant (12) or non-fluorescent dye penetrant remaining in the recesses (14) present in the workpiece surface (10), wherein, following or during the visual assessment according to method step f), in order to verify the obtained visual findings, a further process of bleaching the fluorescent penetrant (12) or the non-fluorescent dye penetrant takes place in the developer layer (16) by means of the gaseous oxidant.

2. Method according to claim 1, **characterized in that** the oxidant is heated in order to carry out method step e).

3. Method according to either of the preceding claims, **characterized in that** a first visual assessment of the workpiece surface (10) takes place before method step e) in a method step d1).

4. Method according to claim 3, **characterized in that** the visual assessment according to method step f) and/or d1) takes place by means of radiation of the workpiece surface (10) to be inspected using UV light.

5. Method according to any of the preceding claims, **characterized in that** the workpiece surface (10) is cleaned after method step f) has been completed.

6. Method according to any of the preceding claims, **characterized in that** method steps b) to f) are repeated after method step f) has been completed.

7. Method according to any of the preceding claims, **characterized in that** the workpiece surface (10) is a surface of a turbomachine, in particular of a component of a gas turbine.

8. Use of a method according to any of claims 1 to 7 in the production, final testing and repair of components of a turbomachine, in particular components of a gas turbine.

## Revendications

1. Procédé d'examen non destructif d'une surface de pièce usinée (10) d'une pièce usinée (18) au moyen d'un contrôle par ressuage avec pénétrant fluorescent ou d'un contrôle par ressuage avec pénétrant coloré, le procédé comprenant les étapes suivantes :
a) nettoyer la zone à contrôler de la surface de pièce usinée (10) ;
b) appliquer un pénétrant (12) sur la zone à contrôler de la surface de pièce usinée (10), le pénétrant (12) s'introduisant dans des discontinuités (14) potentielles de la surface de pièce usinée (10) et étant un pénétrant liquide fluorescent ou un pénétrant liquide coloré non fluorescent ;
c) éliminer l'excès de pénétrant (12) de la surface de pièce usinée (10) ;
d) appliquer un révélateur (16) sur la zone à contrôler de la surface de pièce usinée (10) ;
e) décolorer le pénétrant fluorescent (12) ou le pénétrant coloré non fluorescent à l'aide d'un agent d'oxydation gazeux dans la couche formée par l'application du révélateur (16) sur la surface de pièce usinée (10), l'agent d'oxydation étant de l'ozone, et la pièce usinée (18) présentant la surface de pièce usinée (10) étant introduite dans une chambre ou un récipient rempli(e) d'ozone pour réaliser l'étape de procédé e) ou étant au moins soumise à un courant d'ozone dans la zone de la surface de pièce usinée (10) ; et
f) analyser visuellement le pénétrant fluorescent (12) ou le pénétrant coloré non fluorescent resté dans les discontinuités (14) existantes dans la surface de pièce usinée (10), une opération de décoloration supplémentaire du pénétrant fluorescent (12) ou du pénétrant coloré non fluorescent dans la couche de révélateur (16) étant effectuée à l'aide de l'agent d'oxydation gazeux après ou pendant l'analyse visuelle selon l'étape de procédé f) pour vérifier les résultats visuels obtenus.

2. Procédé selon la revendication 1, **caractérisé en ce que** l'agent d'oxydation est chauffé pour réaliser l'étape de procédé e).

3. Procédé selon l'une des revendications précédentes, **caractérisé en ce qu'**une première analyse visuelle de la surface de pièce usinée (10) est effectuée lors d'une étape de procédé d1) avant l'étape de procédé e).

4. Procédé selon la revendication 3, **caractérisé en ce que** l'analyse visuelle selon l'étape de procédé f) et/ou d1) est effectuée en éclairant la surface de pièce usinée (10) à contrôler avec des rayons UV.

5. Procédé selon l'une des revendications précédentes, **caractérisé en ce qu'**un nettoyage de la surface de pièce usinée (10) est effectué à la fin de l'étape de procédé f).

6. Procédé selon l'une des revendications précédentes, **caractérisé en ce que** les étapes de procédé b) à f) sont renouvelées à la fin de l'étape de procédé f).

7. Procédé selon l'une des revendications précédentes, **caractérisé en ce que** la surface de pièce usinée (10) est une surface d'une turbomachine, en particulier d'un composant d'une turbine à gaz.

8. Utilisation d'un procédé selon l'une des revendications 1 à 7 lors de la fabrication, du contrôle final et de la réparation de composants d'une turbomachine, en particulier de composants d'une turbine à gaz.
